(19) Europäisches Patentamt
European Patent Office
Office européen des brevets

(11) **EP 4 701 186 A1**

(12) **EUROPEAN PATENT APPLICATION**

(43) Date of publication:
**25.02.2026 Bulletin 2026/09**

(21) Application number: **24306386.4**

(22) Date of filing: **22.08.2024**

(51) International Patent Classification (IPC):
**H04N 19/33** (2014.01)　　**H04N 19/172** (2014.01)
**G06N 3/045** (2023.01)　　**H04N 19/59** (2014.01)
**H04N 19/61** (2014.01)

(52) Cooperative Patent Classification (CPC):
**H04N 19/172; G06N 3/045; H04N 19/33;**
**H04N 19/59; H04N 19/61;** H04N 19/503;
H04N 19/593

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
 • **DAMODARAN, Bharath Bhushan**
  **56000 VANNES (FR)**

 • **LE MEUR, Olivier**
  **35160 TALENSAC (FR)**
 • **EL IDRISSI, Taha**
  **35700 RENNES (FR)**
 • **LAMBERT, Anne**
  **35250 SAINT-AUBIN-D'AUBIGNE (FR)**
 • **SCHNITZLER, Francois**
  **56890 SAINT AVE (FR)**

(74) Representative: **Vossius & Partner**
**Patentanwälte Rechtsanwälte mbB**
**Siebertstraße 3**
**81675 München (DE)**

(54) **LAPLACIAN PYRAMID BASED DECOMPOSITION FOR FEATURE BASED INR**

(57) Methods and apparatus are provided for Laplacian Pyramid based decomposition for feature-based implicit neural representation. In one embodiment, the COOL-CHIC method is used with a Laplacian Pyramid decomposition of a video frame into levels of varying resolutions for encoding of a video in intra mode. In another embodiment, COOL-CHIC is used with a Laplacian Pyramid for inter coding.

Figure 9

**Description**

**BACKGROUND**

The MPEG standards organization is exploring technologies for neural compression, including Implicit Neural Representations (INR). INR based compression techniques are relatively new and can be used for 2D and video compression, but INR is investigated for many other signals, in particular 3D scenes or objects or haptic texture. Furthermore, these approaches have a far lower computational complexity than end-to-end neural compression approaches.

**BRIEF SUMMARY**

At least one of the present embodiments generally relates to a method or an apparatus for Laplacian pyramid-based decomposition for feature based Implicit Neural Representations.

According to a first aspect, there is provided a method. The method comprises steps for decomposing an image into a plurality of levels using a Laplacian pyramid and an autoregressive model to generate corresponding latent grids; predicting each level of the Laplacian pyramid using a separate synthesis network; and, encoding information comprising parameters of the autoregressive model, the latent grids, parameters of the synthesis network, and number of levels of the Laplacian pyramid into a bitstream.

According to a second aspect, there is provided another method. The method comprises steps for obtaining an autoregressive model from a bitstream; decoding latent grids from the autoregressive model; decoding synthesis network parameters from the bitstream; and, reconstructing the image using the synthesis network on the latent grids.

According to another aspect, there is provided an apparatus. The apparatus comprises a processor and a memory. The processor can be configured to operate according to the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal or bitstream comprising a 3D scene, including an avatar and its hairstyle or video data generated according to any of the described encoding embodiments or variants.

According to another general aspect of at least one embodiment, a bitstream comprising a 3D scene, including an avatar and its hairstyle or video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

**BRIEF DESCRIPTION OF THE DRAWINGS**

The following detailed description will be better understood when read in conjunction with the appended drawings, in which there are shown examples of one or more of the multiple embodiments of the present description. It should be understood, however, that the embodiments described herein are not limited to the precise arrangements and instrumentalities shown in the drawings. In the drawings:

Figure 1 is a block diagram illustrating an example system according to one or more embodiments of the present description.
Figure 2 is a block diagram illustrating an example video encoder according to one or more embodiments of the present description.
Figure 3 is a block diagram illustrating an example video decoder according to one or more embodiments of the present description.
Figure 4 illustrates a simple neural network used for implicit neural representation.
Figure 5 illustrates an example process to encode a signal using an INR.

Figure 6 illustrates a neural architecture that is a typical INR variant.
Figure 7a illustrates encoding a video frame using COOL-CHIC.
Figure 7b illustrates the decomposition of a frame using a Laplacian pyramid.
Figure 8 illustrates a modified COOL-CHIC with Laplacian pyramid.
Figure 9 illustrates encoding of a video frame using COOL-CHIC with Laplacian pyramid.
Figure 10 illustrates one embodiment of an encoding method under the described aspects.
Figure 11 illustrates one embodiment of a decoding method under the described aspects.
Figure 12 illustrates one embodiment of an apparatus under the described aspects.

**DETAILED DESCRIPTION**

In describing the various embodiments of the present description, certain terminology is used herein for convenience only and should not be considered as limiting such embodiments. In the drawings, the same reference numerals are employed for designating the same elements throughout the several figures and the present description.

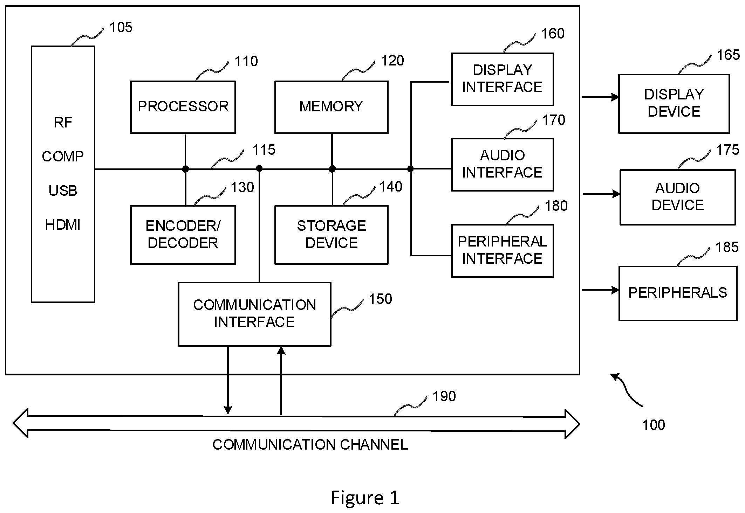

Referring to the drawings, there is shown in Figure 1 a block diagram illustrating an example system 100 in which embodiments of the present description can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process a 3D scene description data or video data and to provide encoded video data or decoded video data. The encoder/decoder module 130 may include one or more processors and/or memory (not shown). Although Figure 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include 3D meshes and textures thereof, 3D polylines and colors thereof, data for animating faces and bodies of avatars, camera poses, or input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

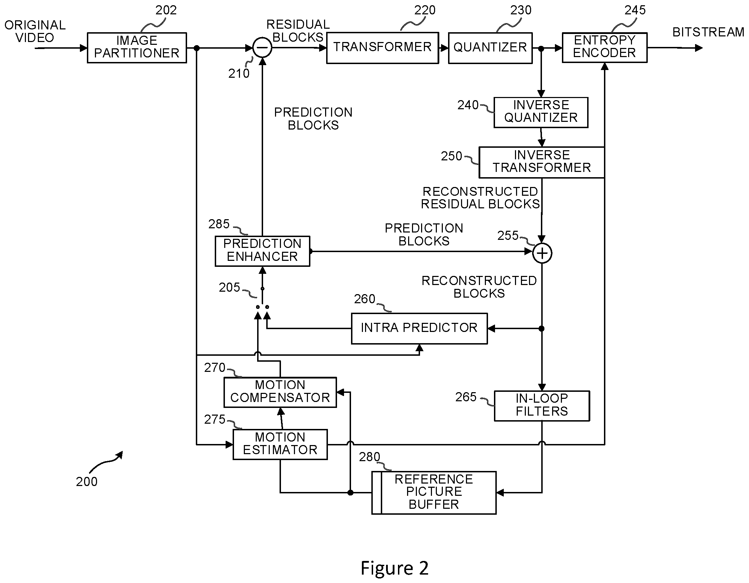

Figure 2 is a block diagram illustrating an example video encoder 200 that may be employed by the system 100 (e.g., via the encoder/decoder module 130) described with respect to Figure 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

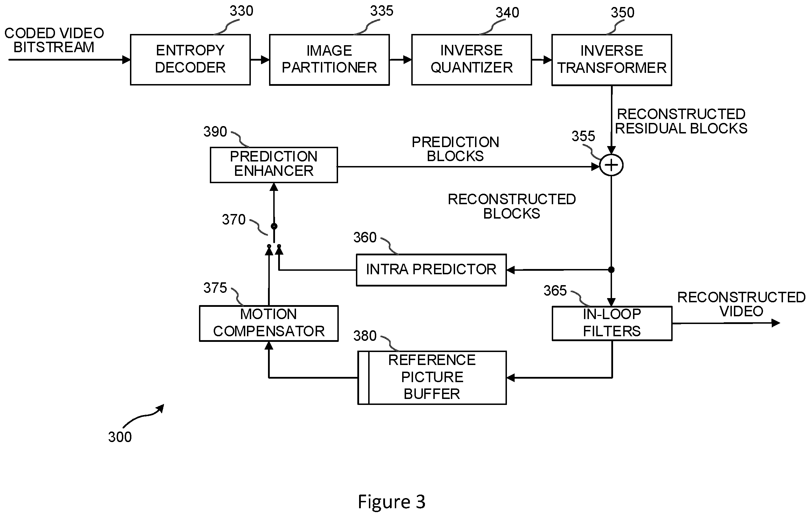

Some embodiments disclosed herein are described with reference to a coding unit (CU) or block of a video frame (or a video image or picture) to which coding tools may be applied by the video encoder 200 and/or by the video decoder 300 (described below with reference to Figure 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and V (also denoted herein by C).

Referring generally to Figure 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

Figure 3 is a block diagram illustrating an example of video decoder 300 that may be employed by the system 100 (e.g., via the encoder/decoder module 130) described with respect to Figure 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to Figure 2. The post-decoding processor can use metadata derived by the pre-encoding processor and/or signaled in the video bitstream.

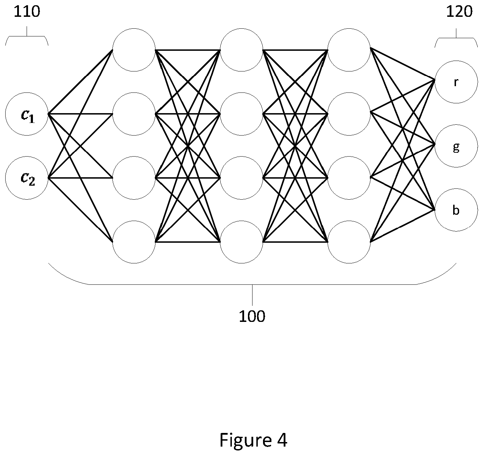

Figure 4 illustrates a simple neural network used for implicit neural representation (INR). Such a neural network used for INR can be referred to as an INR network. INR parameterizes a signal as a function 100, which takes coordinates 110 as input and outputs values 120 of a signal at these coordinates. INR has recently been applied to image, videos or 3D objects among other applications. In the image case, the inputs 110 can be pixel coordinates $(c_1, c_2)$ and the INR may output 120 the color values $(r, g, b)$ or $(y, u, v)$ of the input pixel. The input coordinates may be modified by a transformation before being used as input for the neural network. This transformation can be a Fourier mapping, coordinate transformation, normalization etc.

The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network 100 is typically a neural network, composed of multiple neural layers, such as fully connected layers. In Figure 4, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

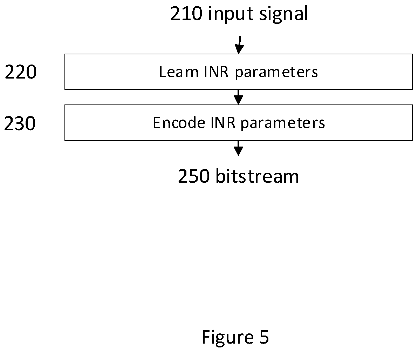

Figure 5 illustrates a typical process to encode a signal 210 using an INR. This is done by optimizing the parameters $\theta$ (or a subset of them) of the INR network to reconstruct the signal 220 and optionally encoding them 230 to create the output bitstream 250. For an image x of size (M $\times$ IV), the parameters $\theta$ can for example be optimized by minimizing the following loss function:

$$\mathbf{Loss = D}(x, f_\theta(x)) + \lambda R(\theta)$$

$$D_{MSE} = \frac{1}{MN} \sum_{c_1, c_2} \left( x(c_1, c_2) - f_\theta(c_1, c_2) \right)^2 \quad ,$$

where D is a distortion which quantifies the difference between the reconstructed image by $f_\theta$ to the original image x, R is the bitrate of the encoded parameters and $\lambda$ a trade-off parameter between D and R. D could be any differentiable distortion measure, such as mean squared error as in the second equation. M and N are the width and height of an image. Other metrics such as LPIPS (learned perceptual image patch similarity) can also be used in this case. The optimization of the parameters $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs $(c_1, c_2)$ for all $c_1 \in 0,1, ...,255$ and $c_2 \in 0,1, ...,255$. Other choices are possible, for example to upsample, downsample or extend the original image.

The bitstream encoding a signal is thus created by encoding the parameters of the neural network. This is typically done by a neural compression codec such as Neural Network Coding (NNC)/ ISO/IEC 15938-17 or MPEG-7 part 17 or simply by quantizing the parameters and/or pruning some neurons from the network.

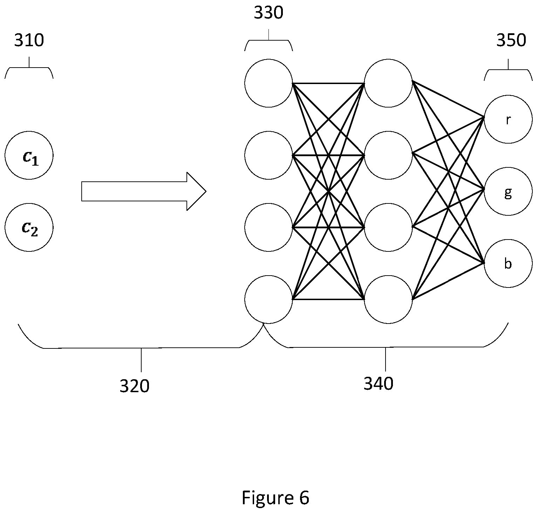

Figure 6 illustrates a neural architecture that is a typical INR variant (Hybrid INR), such as COOL-CHIC. The input coordinates 310 are first mapped to a vector of latent features 330, named y (the size of the vector is noted L in the following). Such a mapping 320 can for example rely on a lookup table, a partition of the signal, a hash function and/or a linear combination of features or directly learned these features. These features may then be upsampled and then used as input for an INR synthesis network 340 that outputs the value 350 of the signal for the input coordinates 310. Using such an architecture rather than a plain INR network helps to handle local features of the input signal. Indeed, the features for a given location can be completely or mostly independent from features at other coordinates and thus can be tailored to each location.

In hybrid INR approaches, these latent features *y are* typically the largest contributor to the bitstream size, several orders of magnitude larger than the one associated to the MLP parameters, except for small bitstream lengths. One solution to reduce the transmission cost of these latent features relies on quantization and entropy coding.

The attention given to the entropy coding of the latent features appears on the new formulation of the loss function:

$$\min_{\hat{y}, \theta, \psi} D \left( x, f_\theta \big( \text{upsample}(\hat{y}) \big) \right) - \lambda \log_2 p_\psi (\hat{y}), \quad \quad (1)$$

where $\hat{y}$ is the quantized latent and $p_\psi(\hat{y})$ is the discrete distribution over the quantized latent features. The distribution of these latent features can for example be a known distribution or estimated using an auto regressive probability model.

According to Equation (1), minimizing the rate associated to the transmission of the compressed version of the frame relies on minimizing the rate associated to the latent features. This can be achieved either by:

- Reducing the amount of information contained in the latent features risking a poor reconstruction of the sent frame and an increase of distortion in $\hat{x} = f_\theta(\text{upsample}(\hat{y}))$. (less information in $\hat{y}$ -> more distortion in $\hat{x}$).
- Or one can try to estimate the distribution of the sent latent as close as possible to the real (unknown) one using a well-chosen probability model. If that probability model is trained, it must be included in the bitstream.

Due to its high dimension the modeling of the joint distribution of $\hat{y}$ is usually untrackable.

Instead it is typical to factorize $p_\psi(\hat{y})$ and use a set of C context latents $c_{ijk}^s$ such that the distribution of each quantized latent $\widehat{y_{ijk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of $p_\psi(\hat{y})$ is given by:

$$p_\psi(\hat{y}) = \prod_{i,j,k} p_\psi\left(\widehat{y_{ijk}} \middle| c_{ijk}^s\right),$$

Where $p_\psi\left(\widehat{y_{ijk}} \middle| c_{ijk}^s\right)$ denotes the conditional probability of one latent value at position (i,j,k) conditioned on its spatial context $c_{ijk}^s$. (i, j) represents the spatial coordinate and k represents a latent feature.

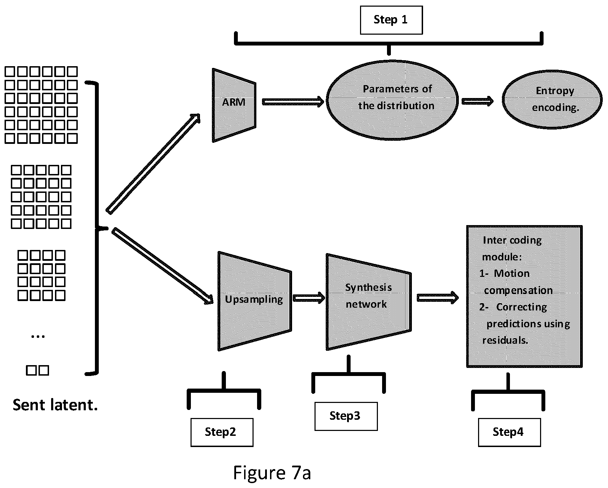

To illustrate the full operation of such a codec, Figure 7a shows how COOL-CHIC works. COOL-CHIC is a Coordinate-based Low Complexity Hierarchical Image/video codec that proposes an alternative way to encode images and videos with less complexity in comparison with autoencoder-based codecs.

COOL CHIC can be outlined in four main steps:

1. It starts by a forward pass through the autoregressive module (ARM) to estimate the parameters of the distribution associated to the sent latent (used during entropy coding). Here and later in this document, sent latent refers to the latent values which are quantized and used during the entropic coding in the bitstream.
2. The second step consists in upsampling the sent latent using (learned or non-learned) up sampling network.
3. The third step is a forward pass through the synthesis module to generate, for every pixel of the upsampled latent, a set of outputs such as optical flows, residual and pixel-wise weighting.
4. These outputs are used by the Inter coding module to generate the frame. This last step is a motion compensation using already encoded reference frames, weighting the resulting motion compensated prediction. The latter is then corrected to generate the final results by applying the residual.

COOL-CHIC for video compression is built on 2 modules:

- The COOL-CHIC encoder

- Inter coding module.

The COOL-CHIC encoder is trained to replace the sent frame by a compressed version composed of 2 neural networks (Auto-regressive probability model, Synthesis model) along with a set of L 2- dimensional learned discrete latent values. In COOL-CHIC, Entropy coding relies on the discrete distribution $p_\psi(\hat{y})$ extracted from the learned continuous distribution "g" modeled as Laplace distribution $g = \mathcal{L}|(\mu_{ijk}, \sigma_{ijk})$ using integration. The network $f_\psi$ learns to estimate the proper expectation and scale parameters $\mu_{ijk}, \sigma_{ijk}$ of that Laplace distribution over the non-quantized latent y, conditioned on the context latents. Such as the probability of latent feature is:

$$p_\psi\left(\widehat{y_{ijk}} \middle| c_{ijk}\right) = \int_{\widehat{y_{ijk}}-0.5}^{\widehat{y_{ijk}}+0.5} g(y)dy, \text{ with } g \cong \mathcal{L}\left(\mu_{ijk}, \sigma_{ijk}\right) \quad \text{and} \quad \mu_{ijk}, \sigma_{ijk} = f_\psi\left(c_{ijk}\right)$$

After entropy decoding the latent values, the decoded data is upsampled to highest resolution and concatenated into an L dimension representation, which is given as input to the synthesis module to map the values of all the channels of each pixel with an RGB value in case of image compression.

For video compression the output will be a list of tensors representing the input for the inter coding module responsible of the exploitation of motion compensation.

The current hybrid INR methods like COOL-CHIC aims to reconstruct the entire frame which consists of the low and high frequency components, this might be difficult for the COOL-CHIC to learn the whole information. The COOL-CHIC method consists of multi-resolution latent grids to capture the different frequency content, but the entire latent grids are processed by the one single synthesis network to predict the frame. Using one synthesis network might not be sufficient.

In the described embodiments, the ground truth frames are decomposed using Laplacian pyramid to generate the output frames at different resolutions, and one synthesis network is learned per resolution.

Also in the described embodiments,

- The ground truth frame is decomposed using Laplacian pyramid into hierarchy of multiple resolutions, and the latents and the synthesis network specific to each resolution of the Laplacian Pyramid is learned. The structure of the COOL-CHIC method is modified.
- Leveraging the decomposition of the frequency information in the frames and learning specific synthesis network to reconstruct the specific resolution may improve the reconstruction quality of the output frames.
- The embodiments describe an encoding and a corresponding decoding procedure for hybrid-INR in general.
- There is at least one of the approaches that describe an embodiment with the COOL-CHIC algorithm.

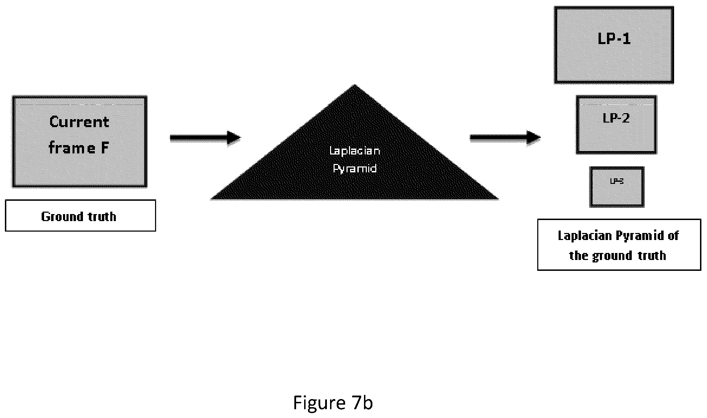

Let $F$ be an image frame to be encoded, the image $F$ is decomposed into multiple hierarchical decomposition $LP_3$, $LP_2$, $LP_1$ using Laplacian pyramid as shown in Figure 7b (The number of level has been chosen arbitrary to illustrate the proposed method). The $LP_3$ is the low-resolution decomposition and the higher levels are the residual of the previous level of decomposition. The advantage of such a decomposition is that the information content in the frame is separated into different levels so that each information content can be learnt separately or learnt in a hierarchical manner.

**COOL-CHIC with Laplacian Pyramid**

The hybrid-INR method such as COOL-CHIC method described earlier consists of multi-resolution latent grids, autoregressive entropy model, upsampling layer, and synthesis network. Here with Laplacian Pyramid, the number of decomposition levels is fixed, let the number of decomposition level be $K$, accordingly the number of multi-resolution latent grids for COOL-CHIC is chosen.

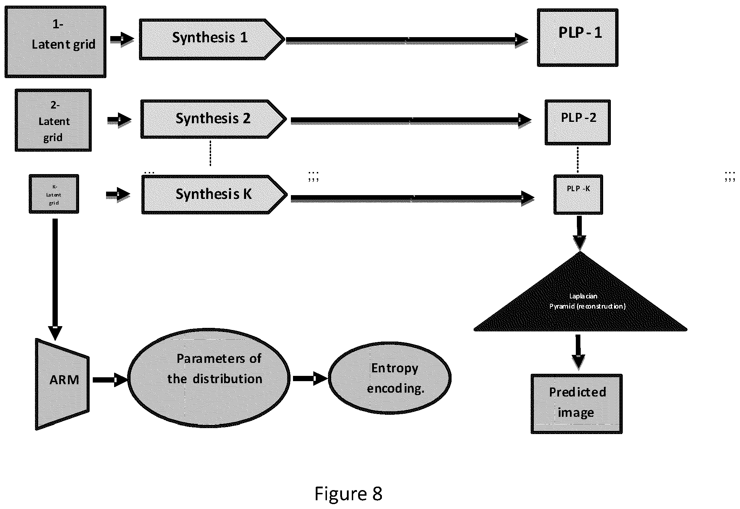

Let $\{y_1, ..., y_K\}$ be the $K$ level of latent grids, and each level of latent grid corresponds to the decomposition level of the Laplacian pyramid. For each level, a separate synthesis network is proposed that predicts the particular level of Laplacian pyramid, thus $\{S_1, .... S_K\}$ be the $K$ synthesis network. Due to this modified framework, the upsampling layer used in the COOL-CHIC may not be needed. The modified COOL-CHIC with Laplacian pyramid is shown in Figure 8.

The rate-distortion loss function of the COOL-CHIC with Laplacian Pyramid can be formulated in three ways:

$$Loss = D\left(F, \widehat{F}\right) + \lambda R(Y) \qquad (2)$$

In this way there is no-modification to the original COOL-CHIC loss function.

Secondly, the loss function at the Laplacian pyramid level is designed, for example, as

$$Loss = \lambda R(Y) + D_L(LP, PLP) \qquad (3)$$

here $D_L(LP,PLP) = \Sigma_K \gamma_k D(LP_k, PLP_k)$, where $LP_k$ is the ground truth Laplacian pyramid at level $k$, $PLP_k$ is the predicted Laplacian pyramid at level $k$ by the $k^{th}$ synthesis network, and $\gamma_k$ is the weighting factor. The distortion could be mean squared error or the combination of mean absolute error (L1 distance) and mean squared error. For the lowest resolution, one could use the mean squared error and the remaining resolutions one could use the L1 distance, as the L1 distance might be more adapted to the residuals. In a variant, the distortion could also be the elastic net (combination of L1 and L2 distance) for all the resolutions.

The final variant of the loss is the combination of the (2) and (3) as

$$Loss = D\left(F, \widehat{F}\right) + \lambda R(Y) + D_L(LP, PLP) \qquad (4)$$

For estimating the entropy distribution of the multi-resolution grids, one autoregressive model for the entire multi-resolution grids could be used as in the COOL-CHIC.

The rate term in the loss functions (2-4) does not include the rate of the synthesis blocks, but one could include the weights of the synthesis blocks in the rate term.

**Encoding in Bit-stream:** Following information are contained in the bit-stream

1. The parameters of the autoregressive model is encoded in the bitstream. If the model involves a neural network, this is typically done by a neural compression codec such as Neural Network Coding (NNC)/ ISO/IEC 15938-17 or MPEG-7 part 17 or simply by quantizing the weights and/or pruning some neurons from the network or by fixed bit representations (e.g 16 bits)

2. Latent grids are encoded in the bitstream using the autoregressive model

3. The parameters of the synthesis blocks are encoded in the bitstream. This is typically done by a neural compression codec such as Neural Network Coding (NNC)/ ISO/IEC 15938-17 or MPEG-7 part 17 or simply by quantizing the weights and/or pruning some neurons from the network or by fixed bit representations (e.g. 16 bits)

4. Number of levels of Laplacian pyramid

The earlier section described the encoding process of the COOL-CHIC with Laplacian Pyramid in the intra mode. Here, COOL-CHIC is described with Laplacian Pyramid for the inter coding. The first frame in the GOP is encoded as in the section for intra coding above. For the inter-coding, the modified COOL-CHIC with Laplacian Pyramid contains following compared to the section for intra coding above.

- The number of latent grids and synthesis network are similar to the section for intra coding above.
- The difference is that, the synthesis network predicts the motion vector and residual information for each level of the Pyramid.

  ◦ That is, the synthesis network predicts the bi-directional flow vectors (Flow_1, Flow_2), pixel wise weighting of flow (Beta), residuals (residue), and the pixel-wise masking (alpha)
  ◦ These outputs are used by the Inter coding module to generate the predicted Laplacian pyramid. That is, motion compensation is performed using already encoded reference frames and flow vectors, then weighting the resulting motion compensated prediction. The latter is then corrected to generate the final results by applying the residual.

- Finally, the predicted frame is reconstructed by the Laplacian pyramid

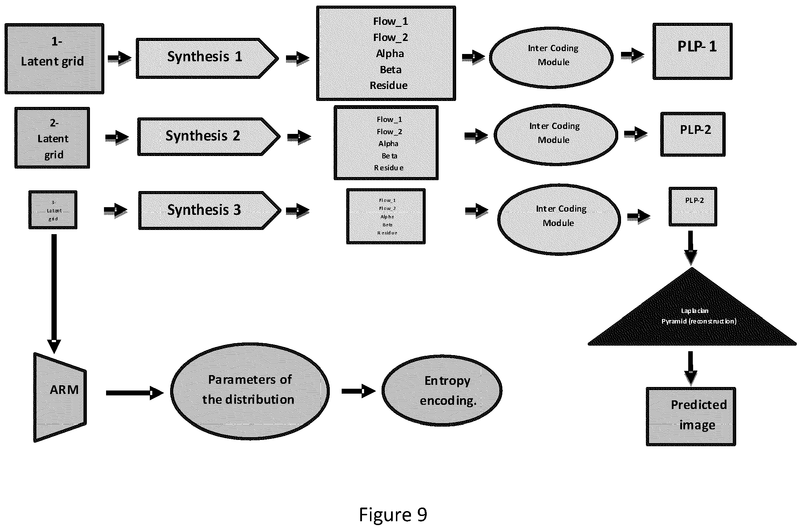

The architecture of the modified COOL-CHIC with Laplacian Pyramid is shown in Figure 9. The loss functions (2-4) can be employed to optimize the parameters. The information encoded in the bit-stream for inter-coding is similar to intra frame.

The autoregressive model is learnt for each frame, and for certain frame the autoregressive model could be also reused from the already decoded frames. This information is encoded in the bit-stream.

**Decoding**

From the bit-stream, the decoding is performed as follows:

  ◦ First the autoregressive model is obtained. It may be obtained from the already encoded frames, if the autoregressive model is reused.
  ◦ Then the latent grids are decoded using the autoregressive models. Then the synthesis network parameters are decoded from the bitstream.
  ◦ Then the frames are reconstructed by employing the synthesis network on the latent grids. If it is the intra-frame, then synthesis network and Laplacian pyramid reconstruction is used to predict the intra-frame. If it is inter-coding, then after the synthesis network predictions, the corresponding inter-coding procedure is employed to reconstruct the predicted frames.

The described embodiments are related to learning based compression and implicit neural network-based compression. INR based compression techniques are relatively new and these approaches have a far lower computational complexity than end-to-end neural compression approaches.

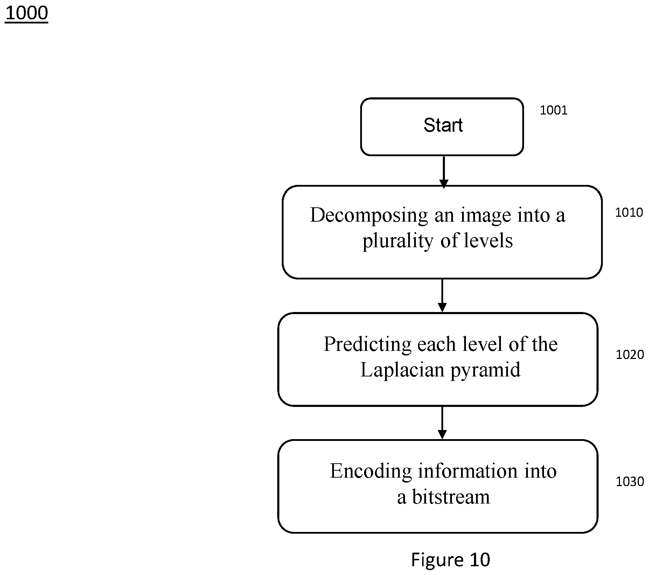

One embodiment of a method 1000 under the general aspects described here is shown in Figure 10. The method commences at start block 1001 and control proceeds from block 1001 to block 1010 for decomposing an image into a plurality of levels using a Laplacian pyramid and an autoregressive model to generate corresponding latent grids. Control proceeds from block 1010 to block 1020 for predicting each level of the Laplacian pyramid using a separate synthesis network. Control proceeds from block 1020 to block 1030 for encoding information comprising parameters of the autoregressive model, the latent grids, parameters of the synthesis network, and number of levels of the Laplacian pyramid into a bitstream.

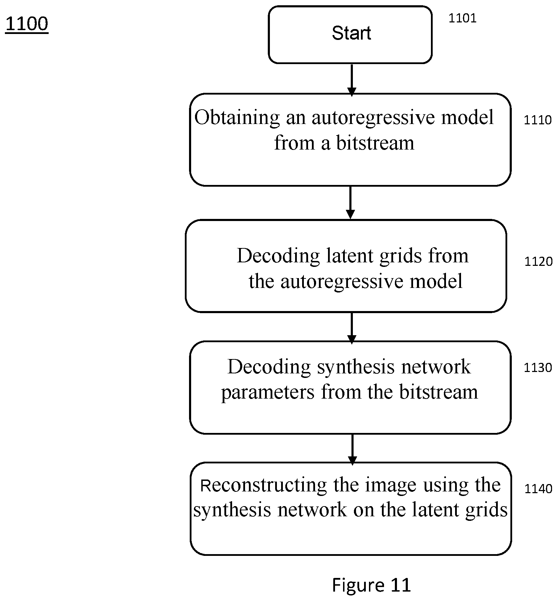

One embodiment of a method 1100 under the general aspects described here is shown in Figure 11. The method commences at start block 1101 and control proceeds to block 1110 for obtaining an autoregressive model from a bitstream. Control proceeds from block 1110 to block 1120 for decoding latent grids from the autoregressive model; Control proceeds from block 1120 to block 1130 for decoding synthesis network parameters from the bitstream. Control proceeds from block 1130 to block 1140 for reconstructing the image using the synthesis network on the latent grids reconstructing the avatar comprising a hairstyle with baldness areas using said baldness information.

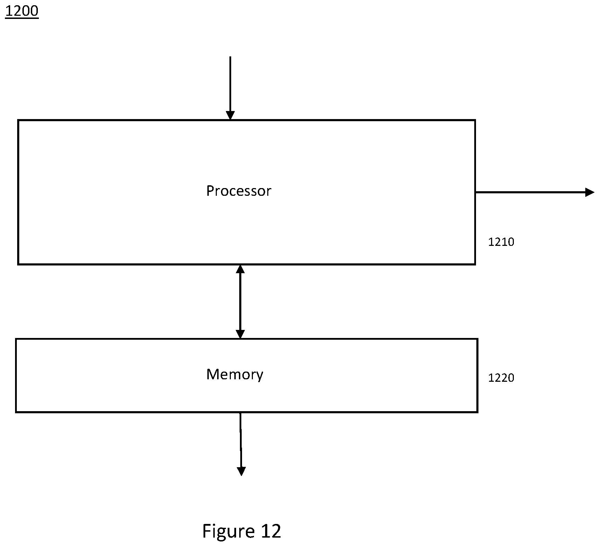

Figure 12 shows one embodiment of an apparatus 1200 for encoding, decoding, compressing, or decompressing, or filtering of 3D scene description data using the aforementioned methods. The apparatus comprises Processor 1210 and can be interconnected to a memory 1220 through at least one port. Both Processor 1210 and memory 1220 can also have one or more additional interconnections to external connections.

Processor 1210 is also configured to either insert or receive information in a bitstream and, either compressing, encoding, or decoding using any of the described aspects.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to Figures 2 and 3 may be implemented as one or more modules and modified according to the various embodiments of the present description.

The various embodiments described herein provide at least the following features, devices or aspects, alone or on any combination, across various claim categories and types:

i. Encoding, into coded 3D scene description data, syntax elements that can enable the decoder to decode the coded 3D scene description data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present description may refer to "determining" various pieces of information. Determining information may include one or more of, for example, estimating, calculating, predicting, or retrieving (e.g., from memory) the information.

The present description may refer to "accessing" various pieces of information. Accessing information may include one or more of, for example, receiving, retrieving (e.g., from memory), storing, moving, copying, calculating, determining, predicting, or estimating the information. Similarly, the present description may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present description refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present description or the following claims. Although features and elements are described herein in particular combinations, those of ordinary skill in the art will appreciate that such features or elements may be used alone or in any combination with the other features and elements. It is understood, therefore, that the overall teachings of the present description are not limited to the particular embodiments, implementations, and examples disclosed herein, but are intended to cover variations, modifications, and alternatives as defined by the appended claims and any and all equivalents thereof.

**Claims**

1. A method, comprising:

   decomposing an image into a plurality of levels using a Laplacian pyramid and an autoregressive model to generate corresponding latent grids;
   predicting each level of the Laplacian pyramid using a separate synthesis network; and,
   encoding information comprising parameters of the autoregressive model, the latent grids, parameters of the synthesis network, and number of levels of the Laplacian pyramid into a bitstream.

2. An apparatus, comprising:
   a memory and a processor configured to perform:

   decomposing an image into a plurality of levels using a Laplacian pyramid and an autoregressive model to generate corresponding latent grids;
   predicting each level of the Laplacian pyramid using a separate synthesis network; and,
   encoding information comprising parameters of the autoregressive model, the latent grids, parameters of the synthesis network, and number of levels of the Laplacian pyramid into a bitstream.

3. A method, comprising:

   obtaining an autoregressive model from a bitstream;
   decoding latent grids of an image from the autoregressive model;
   decoding synthesis network parameters from the bitstream; and,
   reconstructing the image using the synthesis network on the latent grids.

4. An apparatus, comprising:
   a memory and a processor configured to perform:

   obtaining an autoregressive model from a bitstream;
   decoding latent grids of an image from the autoregressive model;
   decoding synthesis network parameters from the bitstream; and,
   reconstructing the image using the synthesis network on the latent grids.

5. The method of Claim 3, or the apparatus of Claim 4, wherein said reconstructing further comprises:
   predicting an intra coded frame using the synthesis network and a Laplacian pyramid reconstruction.

6. The method of Claim 3, or the apparatus of Claim 4, wherein said reconstructing further comprises:
   predicting an inter coded frame using the synthesis network and an inter coded method.

7. A device comprising:

   an apparatus according to Claim 3; and
   at least one of (i) an antenna configured to receive a signal, the signal including a video block, (ii) a band limiter configured to limit the received signal to a band of frequencies that includes the video block, and (iii) a display configured to display an output representative of the video block.

8. A non-transitory computer readable medium containing data content generated according to the method of any one of claims 1, 3, or 5 through 6, or by the apparatus of any one of claims 2, 4, or 5 through 6, for playback using a processor.

9. A signal comprising video data generated according to the method of any one of claims 1, or 3, or 5 through 6, or by the apparatus of any one of claims 2, or 4, or 5 through 7, for playback using a processor.

10. A computer program product comprising instructions which, when the program is executed by a computer, cause the computer to carry out the method of any one of claims 1, or 3 or 5 through 6.

Figure 1

ORIGINAL VIDEO

IMAGE PARTITIONER — 202

RESIDUAL BLOCKS

210

TRANSFORMER — 220

QUANTIZER — 230

ENTROPY ENCODER — 245

BITSTREAM

INVERSE QUANTIZER — 240

INVERSE TRANSFORMER — 250

RECONSTRUCTED RESIDUAL BLOCKS

255

PREDICTION BLOCKS

RECONSTRUCTED BLOCKS

IN-LOOP FILTERS — 265

INTRA PREDICTOR — 260

REFERENCE PICTURE BUFFER — 280

PREDICTION BLOCKS

PREDICTION ENHANCER — 285

205

MOTION COMPENSATOR — 270

MOTION ESTIMATOR — 275

200

Figure 2

Figure 3

Figure 4

210 input signal

| 220 | Learn INR parameters |
| 230 | Encode INR parameters |

250 bitstream

Figure 5

350

310

330

340

320

Figure 6

Figure 7a

Figure 7b

Figure 8

Figure 9

```
                    ┌──────────────┐
                    │     Start    │  1001
                    └──────┬───────┘
                           │
                           ▼
                    ┌──────────────────────┐
                    │ Decomposing an image │  1010
                    │  into a plurality    │
                    │      of levels       │
                    └──────────┬───────────┘
                               │
                               ▼
                    ┌──────────────────────┐
                    │ Predicting each level│  1020
                    │       of the         │
                    │   Laplacian pyramid  │
                    └──────────┬───────────┘
                               │
                               ▼
                    ┌──────────────────────┐
                    │ Encoding information │  1030
                    │    into a bitstream  │
                    └──────────────────────┘
```

Figure 10

**1100**

Figure 11

1200

Processor

1210

Memory

1220

Figure 12

## EUROPEAN SEARCH REPORT

**Application Number**

EP 24 30 6386

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYUNJIK KIM ET AL: "C3: High-performance and low-complexity neural compression from a single image or video", ARXIV.ORG, CORNELL UNIVERSITY LIBRARY, 201 OLIN LIBRARY CORNELL UNIVERSITY ITHACA, NY 14853, 5 December 2023 (2023-12-05), XP091664794, * abstract * * Section 2 * * figure 2 * | 1-10 | INV. H04N19/33 H04N19/172 G06N3/045 H04N19/59 H04N19/61 |
| A | BURT P J ET AL: "THE LAPLACIAN PYRAMID AS A COMPACT IMAGE CODE", IEEE TRANSACTIONS ON COMMUNICATIONS, IEEE SERVICE CENTER, PISCATAWAY, NJ. USA, vol. COM 31, no. 4, 1 April 1983 (1983-04-01), pages 532-540, XP000570701, ISSN: 0090-6778, DOI: 10.1109/TCOM.1983.1095851 * page 535 - page 536 * | 1-10 | |
| | | | **TECHNICAL FIELDS SEARCHED (IPC)** |
| A | Denton Emily ET AL: "Deep Generative Image Models using a Laplacian Pyramid of Adversarial Networks", , 7 December 2015 (2015-12-07), XP093172294, Retrieved from the Internet: URL:https://proceedings.neurips.cc/paper/2 015/file/aa169b49b583a2b5af89203c2b78c67c- Paper.pdf * abstract * * Sections 2.2 and 2.3 * | 1-10 | H04N G06N |

The present search report has been drawn up for all claims

| Place of search | Date of completion of the search | Examiner |
|---|---|---|
| The Hague | 31 January 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)